# EUROPEAN PATENT APPLICATION

(11) **EP 3 696 239 A1**
(43) Date of publication of application: **19.08.2020**
(21) Application number: 19305196.8
(22) Date of filing: 18.02.2019
(51) Int. Cl.: C09D 5/00, C09G 1/08, C09J 11/00, C23G 5/032, C09D 7/20

(54) **USE OF EUCALYPTOL AND COMPOSITIONS CONTAINING IT**

(71) Applicant: Berteina-Raboin, Sabine, 41600 Chaumont sur Tharonne (FR)
(72) Inventor: Berteina-Raboin, Sabine, 41600 Chaumont sur Tharonne (FR)
(74) Representative: Fédit-Loriot

(57) **Abstract**

Use of eucalyptol as solvent or diluent (i) for carrying out a chemical reaction, (ii) for the manufacture or dilution of a composition such as paint, lacquer, varnish, adhesive, polymer, wax or emulsion, (iii) for metal machining as degreasing solvent or lubricant.

## Description

### Background

In a context of sustainable development, the need to find alternatives to compounds from non-renewable resources is a priority. In the field of organic synthesis, solvents often constitute the major part of the reaction medium. This amount was evaluated for active pharmaceutical ingredients syntheses: it reaches 52% by mass, taking into account only organic solvents, and more than 80% including water. As a result of the high environmental impact caused by solvents, many studies have been devoted to the search for greener and sustainable alternatives and solvent selection guides were published, that included bio-derived solvents. Among the solvents derived from biomass, those produced from food waste represents an interesting approach since their use could participate to a more circular economy. One of those bio-solvents is limonene, a monoterpene unsaturated hydrocarbon with low polarity and weak hydrogen bond basicity, making it an alternative to non-polar petroleum-based solvents used in extraction processes or cleaning applications but rarely for organic transformations. However, limonene cannot be used over a broad range of applications and chemical reactions as a consequence of its chemical reactivity.

Y. Marcus, in Chem. Soc. Rev. (1993), volume 22, pages 409-416 discloses solvents properties and in particular solvatochromic effect of solvating solvents, which descriptors are provided, at least in part, for a list of 170 liquid molecules in Table 1. Product named "18-cineole" in Table 1 might be considered as eucalyptol, albeit there is no certainty about it since it is the only occurrence of this product in the document. Apart from solvatochromic effect, no specific use of these solvents is emphasized.

C. Laurence et al., in J. Phys. Chem. (1994), volume 98, pages 5807-5816, discuss the solvent-solute interactions and show physical properties of 229 solvents including eucalyptol , in Table 1. Solvatochromic effect is mentioned.

P. G. Jessop et al., in Green Chem. (2012), volume 14, pages 1245-1259, disclose solvatochromic data for solvents of interest in green chemistry. Table 1 shows data for 83 molecular solvents, including eucalyptol. Albeit eucalyptol is cited twice at page 1247, no specific advantage can be deduced. It should be noted that eucalyptol is cited as an alternative to protic solvents with low basicity, while it does not seem to be protic and these measurements are performed in view of solvatochromic assessment.

Eucalyptol, also known as 1,3,3-trimethyl-2-oxabicyclo[2.2.2]octane or 1,8-cineol, CAS Registry Number: 470-82-6, is used in personal care compositions such as shampoos, lotions, perfumes or balms.

When used for the preparation of perfumes, eucalyptol is dissolved in ethanol-water solvent mixture.

Eucalyptol is also useful as anti-inflammatory and anti-arthritic drug in e.g. suppositories, or is dissolved in ethanol-based compositions for fumigations as breathing aid.

### Summary

The present invention is directed to the use of eucalyptol as substituent of a solvent or diluent which is not eucalyptol.

### Detailed description

According to a first aspect, the instant invention discloses the use of eucalyptol as substituent of a solvent or diluent which is not eucalyptol.

It has been found that eucalyptol could be an alternative to (i) ethers such as diethylether, tetrahydrofuran or 2-methyl-tetrahydrofuran or (ii) to olefin containing solvents such as limonene or styrene, since it does not require the addition of anti-oxidant such as BHT.

The solvent or diluent is preferably partially substituted.

Eucalyptol is advantageously used for partial or complete substitution of a fossil-based solvent or diluent.

The fossil-based solvent or diluent is an optionally halogenated hydrocarbon, an ether, an alcohol, an ester, a ketone, an amide, a carbonate, a nitrile, an amine, a sulfur containing product, a liquid polymer or oligomer, or an ionic liquid.

The fossil-based solvent or diluent is preferably chosen among (i) linear, cyclic and/or branched alkane or alkene comprising from 5 to 20 carbon atoms, (ii) optionally substituted single ring aromatic or heteroaromatic, (iii) halogenated alkane or alkene, (iv) linear, cyclic and/or branched oxygen, sulfur and/or nitrogen containing hydrocarbon, (v) liquid oligomer or polymer comprising at least one of oxygen, sulfur, nitrogen, fluorine, chlorine, silicon.

The fossil-based solvent or diluent is preferably chosen among (i) dichloromethane, chloroform, tetrachloromethane, trichloroethylene, tetrachloroethylene, (ii) C5-C16 alkane and corresponding optionally cyclic isomers, petroleum ether, naphtha, (iii) diethylether, diisopropylether, methoxycyclopentane, tetrahydrofuran, 2-methyl-tetrahydrofuran, 1,4-dioxane, N-methyl-pyrrolidone, dimethylformamide, formamide, dimethylacetamide, dimethylsulfoxyde, dimethylsulfate, (iv) benzene, bromobenzene, chlorobenzene, dichlorobenzene, ethylbenzene, ethyl benzoate, toluene, xylene, cresol, anisole, furan, thiophene, (v) acetone, acetonitrile, methylethylketone, ethyl acetate, vinyl acetate, isopropyl acetate, methanol, ethanol, propanol, isopropanol, butanol, isobutanol, pentanol, acetic acid, acrylic acid, methacrylic acid, acrylonitrile, methacrylonitrile, diethylcarbonate, (vi) monoethylene glycol, diethylene glycol, triethylene glycol, propylene glycol, (vii) liquid polymer chosen among polyethylene glycol, polypropylene glycol and polysiloxane.

Eucalyptol is preferably used (i) for carrying out a chemical reaction, (ii) for making or diluting a specialty chemical composition, or (iii) for degreasing or lubricating a metal.

According to a second aspect, the invention is about a process for carrying out a chemical reaction, comprising the use of eucalyptol according to the embodiments of its first aspect.

When carrying out a chemical reaction, eucalyptol is preferably separated from the reaction mixture upon reaction completion and optionally recycled.

Chemical reactions which are contemplated are organic, organometallic or inorganic reactions and include (i) oxidation, (ii) reduction, (iii) nucleophilic, electrophilic or radical substitution, addition or elimination, (iv) rearrangement.

The chemical reaction preferably involves a metal containing species. The metal is chosen among alkaline, alkaline-earth, transition, lanthanide, boron, aluminum, gallium, indium, silicon, germanium, tin, lead, antimony, bismuth, and preferably chosen among lithium, sodium, magnesium, potassium, iron, cobalt, ruthenium, rhodium, iridium, nickel, palladium, platinum, copper, silver, gold, zinc, cadmium, boron, aluminum, tin, lead and antimony.

According to a first alternative of the second aspect, the invention is about a process for making or diluting a specialty chemical composition chosen among a paint or a lacquer, comprising the use of eucalyptol according to its first aspect.

According to a second alternative of the second aspect, the invention is about a process for making or diluting a specialty chemical composition which is a varnish, comprising the use of eucalyptol according to its first aspect.

According to a third alternative of the second aspect, the invention is about a process for making or diluting a specialty chemical composition which is an adhesive, comprising the use of eucalyptol according to its first aspect.

According to a fourth alternative of the second aspect, the invention is about a process for making or diluting a specialty chemical composition which is an optionally bio-sourced wax used for the protection or preservation of leather or wood, comprising the use of eucalyptol according to its first aspect.

In this respect, a solid shoe wax or a wax intended for the care of wood furniture can be mixed with variable amount of eucalyptol until the mixture has the desired texture or melt flow.

According to a third aspect, the invention is about a process for degreasing or lubricating a metal, comprising the use of eucalyptol according to its first aspect.

According to a fourth aspect, the invention is about a paint or lacquer composition containing eucalyptol, obtained according to the first alternative process of the second aspect.

According to a fifth aspect, the invention is about a varnish composition containing eucalyptol, obtained according to the second alternative process of the second aspect.

In general, is particularly preferred to use eucalyptol for diluting liquid specialty chemicals such as paints, lacquers and varnishes instead of commonly used commercial diluents such as white spirit, petroleum ether or naphtha, for health reasons, since some aromatic compounds contained in those products are known or potent carcinogenic. The same applies to adhesives where some volatile solvents may be harmful.

According to a sixth aspect, the invention is about an adhesive composition containing eucalyptol, obtained according to the third alternative process of the second aspect.

According to a seventh aspect, the invention is about an optionally bio-sourced wax composition containing eucalyptol, obtained according to the fourth alternative process of the second aspect.

Unless otherwise specified in the present document, percentages are given in percentage by weight.

### Experimental

### Example 1: Use of eucalyptol for performing organic reactions

### General Equipment and general conditions

All reagents were purchased from commercial suppliers and were used without further purification except for DMF, which was stored under argon and activated molecular sieves. The reactions were monitored by thin-layer chromatography (TLC) analysis using silica gel (60 F254) plates. Compounds were visualized by UV irradiation. Flash column chromatography was performed on silica gel 60 (230-400 mesh, 0.040-0.063 mm). Melting points (mp [°C]) were taken on samples in open capillary tubes and are uncorrected. 1H and 13C NMR spectra were recorded on a Bruker DPX 250 (13C, 62.9 MHz), Bruker avance II 250.13 (13C, 63 MHz), Bruker avance 400.13 (13C, 101MHz), or on a Bruker avance III HD nanobay 400.13 (13C, 101 MHz). Chemical shifts are given in parts per million from tetramethylsilane (TMS) as internal standard. The following abbreviations are used for the proton spectra multiplicities: b: broad, s: singlet, d: doublet, t: triplet, q: quartet, p: pentuplet, m: multiplet. Coupling constants (J) are reported in hertz (Hz). Multiplicities were determined by the DEPT 135 sequence. Attributions of protons and carbons were made with the help of HSQC and HMBC 2D NMRs. Eudesmane numbering of carbons was used instead of the IUPAC numbering. Microwaves-assisted reactions were carried out in a Biotage Initiator microwave synthesis instrument and temperatures were measured by IR-sensor. High-resolution mass spectra (HRMS) were performed on a Maxis UHR-q-TOF mass spectrometer Bruker 4G with an electrospray ionisation (ESI) mode. A. Synthesis of Imidazo[1,2-a]pyridines

### 1.1. Synthesis of 2-aryl-imidazo[1,2-a]pyridines

General procedure: 2-amino pyridine (1.062 mmol), bromoacetophenone (1.062 mmol) and NaHCO₃ (2.124 mmol) were dissolved in eucalyptol (2mL) and the reaction was stirred at 105°C for 22 h. After completion the mixture was allowed to cool to room temperature. Then H₂O was added and the aqueous phase was extracted with AcOEt (3x15 mL). The organic phase was dried (Mg₂SO₄), filtered and concentrated under reduced pressure. The crude product was purified by recrystallization with pentane.

2-phenylimidazol[1,2a]pyridine (3a): White solid (171mg, 83%), m.p. 131-132°C. ¹H NMR (400 MHz, CDCl₃) 66.80 (t, J = 6.8 Hz, 1H), 7.20 - 7.22 (m, 1H), 7.32 (t, J = 7.4 Hz, 1H), 7.44 (t, J = 7.6 Hz, 2H), 7.67 (d, J = 9.1 Hz, 1H), 7.86 (s, 1H), 7.95 (d, J = 7.3 Hz, 2H), 8.13 (d, J = 6.8 Hz, 1H) ppm. ¹³C NMR (100.6 MHz, CDCl₃) δ108.2(CH), 112.7(CH), 117.4(CH), 125.1(CH), 125.7(CH), 126.1(2xCH), 128.2(CH), 128.8(2xCH), 133.2(C), 145.3(C), 145.4 (C) ppm.

Similarly are prepared 2-(4-chlorophenyl)imidazo[1,2-a]pyridine: White solid (192mg, 79%), m.p. 206-208°C. , 2-(4-fluorophenyl)imidazo[1,2-a]pyridine: White solid (205mg, 91%), m.p. 166-168°C, 2-(4-nitrophenyl)imidazo[1,2-a]pyridine: Yellow solid (160mg, 63%), m.p. 262-264°C, and 2-(4-methoxyphenyl)imidazo[1,2-a]pyridine: White solid (183mg, 77%), m.p. 134-136°C

### 1.2. Synthesis of 2, 3-diphenyl-imidazo[1,2-a]pyridine

2,3-diphenylimidazol[1,2-a]: 2-phenylimidazol[1,2a]pyridine (0.515mmol) and KOAc (2.059 mmol) were dissolved in eucalyptol (3mL), then Bromobenzene (0.772 mmol), and Pd(OAc)₂ (5mol%) were added and the reaction was stirred at 150°C for 24h. After completion the mixture was allowed to cool to room temperature. Then H₂O was added and the aqueous phase was extracted with AcOEt (3x15mL). The organic phase was dried (Mg₂SO₄), filtered and concentrated under reduced pressure. The crude product was purified by recrystallization with pentane. White solid (84mg, 60%), m.p. 147-149°C. ¹H NMR (400 MHz, CDCl₃) δ6.75 (t, J = 6.8 Hz, 1H), 7.20 - 7.24 (m, 1H), 7.28 - 7.32 (m, 3H), 7.47 - 7.57 (m, 5H), 7.68 - 7.70 (m, 3H), 7.98 (d, J = 6.9 Hz, 1H)ppm. ¹³C NMR (100.6 MHz, CDCl₃) δ112.3 (CH), 117.5 (CH), 121.1 (C), 123.3 (CH), 124.7 (CH), 127.5 (CH), 128.1 (2xCH), 128.3 (2xCH), 144.8(C), 128.9 (CH), 129.5 (2xCH), 129.9 (C), 130.7 (2xCH), 134.1 (C), 142.4 (C) ppm.

Repeating the example with 2.5mol% and 10mol% Pd(OAc)₂ afforded the same product in respectively 42 and 61mol% yield.

Repeating the example with 2.5mol% and 5mol% Pd(OAc)₂ in limonene instead of eucalyptol yielded only traces of the desired compound.

### 1.3. Synthesis of 2, 3-diaryl-imidazo[1,2-a]pyridines different than example 1.2.

General procedure: 2-amino pyridine (1.062mmol), bromoacetophenone (1.062mmol) and NaHCO₃ (2.124mmol) were dissolved in eucalyptol (2mL) and the reaction was stirred at 105°C for 22h. Then, ArBr (1.594 mmol), KOAc (4.248 mmol) and Pd(OAc)₂ (5mol%) were added and the reaction was stirred at 150°C for 24h. After completion, the mixture was allowed to cool to room temperature. Then H₂O was added and the aqueous phase was extracted with AcOEt (3x15mL). The organic phase was dried (Mg₂SO₄), filtered and concentrated under reduced pressure. The crude product was purified by recrystallization with pentane.

When ArBr is 4-fluorobenzene is obtained 2-(4-fluorophenyl)-3-(3,4,5-trimethoxyphenyl)imidazo[1,2-a]pyridine: Yellow solid (298mg, 74%), m.p. 193-195°C. 1H NMR (400 MHz, CDCl₃) δ3.80 (s, 6H),3.96 (s, 3H), 6.64 (s, 2H), 6.76 (d, J = 12.6 Hz, 1H), 7.00 (d, J = 17.6 Hz, 2H), 7.21 (d, J = 15.7 Hz, 1H), 7.68 (d, J = 27.1 Hz, 3H), 7.97 (d, J = 6.9 Hz, 1H) ppm. 13C NMR (100.6 MHz, CDCl₃) δ56.3(2xCH), 61.0(CH), 107.6(2xCH), 112.4(CH), 115.1(CH), 115.3(CH), 117.5(CH), 120.7(C), 123.5(CH), 124.8(CH), 124.9(C), 129.5(CH), 129.6(CH), 130.2(C), 138.6(C), 141.2(C), 144.6(C), 154.3(C), 161.2(C), 163.6(C) ppm. ¹⁹F NMR (376 MHz, CDCl₃) δ-114.5 ppm. HRMS: calcd for C₂₂H₂₀FN₂O₃ [M+H]+ 379.1452, found 379.1450. Similarly are prepared 2-(4-fluorophenyl)-3-(p-tolyl)imidazo[1,2-a]pyridine: Yellow solid (186mg , 58%), m.p. 123-125°C, 2-(4-fluorophenyl)-3-(4-nitrophenyl)imidazo[1,2-a]pyridine: Yellow solid (354mg , 100%), m.p. 201-203°C, 2-(4-fluorophenyl)-3-phenylimidazo[1,2-a]pyridine: White solid (224mg, 73%), m.p. 106-108°C, 2-(4-fluorophenyl)-3-(thiophen-3-yl)imidazo[1,2-a]pyridine: Yellow solid (206mg, 66%), m.p. 129-131°C, and 3-(2-(4-fluorophenyl)imidazo[1,2-a]pyridin-3-yl)quinolone: Yellow solid (292mg , 81%), m.p. 170-172°C.

Average yields of syntheses according to general procedure of example 1.3. using eucalyptol as solvent were superior to those obtained when using DMF (dimethylformamide), PEG (polyethylene glycol) and DMA (dimethylacetamide).

### 1.4. Suzuki-Miyaura coupling reaction

General procedure: A mixture of chloro compound (50 mg), boronic acid (1.5 eq.), Pd(PPh₃)₄ (0.1 eq.) Na₂CO₃ or K₂CO₃ (2 eq.) in Eucalyptol (3 mL) was stirred at 100 °C for 14 - 24 h. The reaction was followed by TLC. After completion the reaction was then cooled to room temperature and the mixture was concentrated under vacuum. The solid obtained was purified by flash chromatography using a mixture of AcOEt/petroleum ether.

When chloro compound is 4-chlorothieno[3,2-d]pyrimidine, then is obtained 4-(p-tolyl)thieno[3,2-d]pyrimidine: white solid (65 mg, 99%), m.p. 117-119 °C.¹H NMR (400 MHz, CDCl₃) δ 2.46 (s, 3H), 7.38 (d, J = 8.0 Hz, 2H), 7.61 (d, J = 5.5 Hz, 1H), 8.01 (d, J = 5.5 Hz, 1H), 8.11 (d, J = 8.2 Hz, 2H), 9.27 (s, 1H) ppm. ¹³C NMR (101 MHz, CDCl₃) δ 21.5 (CH), 125.0 (CH), 127.9 (C), 128.5 (2xCH), 129.8 (2xCH), 134.5 (C), 136.0 (CH), 141.5 (C), 154.9 (CH), 160.0 (C), 162.0 (C) ppm. HRMS: calcd. for C₁₃H₁₁N₂S [M+H]+ 227.0637, found 227.0635.

Similarly were prepared 4-(thieno[3,2-d]pyrimidin-4-yl)benzonitrile: white solid (48 mg, 69%), m.p. 213-215 °C, 4-(3-(trifluoromethyl)phenyl)thieno[3,2-d]pyrimidine (9c): white solid (58 mg, 71%), m.p. 111-113 °C, 4-(benzo[b]thiophen-2-yl)thieno[3,2-d]pyrimidine (9d): white solid (62 mg, 79%), m.p. 173-175 °C, 4-(benzofuran-2-yl)thieno[3,2-d]pyrimidine (9e): white solid (42 mg, 64%), m.p. 145-147 °C, 5-methyl-7-(p-tolyl)-[1,2,4]triazolo[1,5-a]pyrimidine (11a): white solid (47 mg, 71%), m.p. 116-118 °C, 4-(5-methyl-[1,2,4]triazolo[1,5-a]pyrimidin-7-yl)benzonitrile(11b): white solid (31 mg, 44%), m.p. 262-264 °C, 5-methyl-7-(3-(trifluoromethyl)phenyl)-[1,2,4]triazolo[1,5-a]pyrimidine(11c): white solid (43 mg, 52%), m.p. 148-150 °C, 5-methyl-7-(thiophen-3-yl)-[1,2,4]triazolo[1,5-a]pyrimidine(11d): yellow solid (31 mg, 48%), m.p. 135-137 °C, 7-(benzofuran-2-yl)-5-methyl-[1,2,4]triazolo[1,5-a]pyrimidine(11e): white solid (42 mg, 56%), m.p. 207-209 °C, 8-(p-tolyl)-[1,2,4]triazolo[4,3-a]pyrazine(13): white solid (50 mg, 74%), m.p. 208-210 °C, 6-(p-tolyl)-[1,2,4]triazolo[4,3-a]pyrazine(15): white solid (46 mg, 68 %), m.p. 242-244 °C, 4-(p-tolyl)furo[3,2-c]pyridine (17a): white solid (44 mg, 65%), m.p. 122-124 °C, 4-(furo[3,2-c]pyridin-4-yl)benzonitrile (17b): white solid (38 mg, 53 %), m.p. 169-171 °C, 4-(3-(trifluoromethyl)phenyl)furo[3,2-c]pyridine (17c): white solid (84 mg, 98%), m.p. 89-91 °C, 4-(thiophen-3-yl)furo[3,2-c]pyridine (17d): white solid (40 mg, 61%), m.p. 93-95 °C, and 4-(benzofuran-2-yl)furo[3,2-c]pyridine (17e): white solid (53 mg, 69 %), m.p. 105-107 °C.

Average yields of syntheses according to general procedure of example 1.4. using eucalyptol as solvent were superior to those obtained when using THF (tetrahydrofuran), toluene, DMF (dimethylformamide), 1,4-dioxane, and DME (dimethoxyethane).

### 1.5. Sonogashira-Hagihara coupling reaction

General procedure : A mixture of chloro compound (50 mg), acetylene compound (1.5 eq.), Pd(PhCN)₂Cl₂ (0.1 eq.), P(Cy₃) (0.2 eq.), Cs₂CO₃ (2 eq.) in Eucalyptol (3 mL) was stirred at 100 °C for 16 - 36 h. The reaction was followed by TLC (Thin Layer Chromatography). After completion the reaction was cooled to room temperature and the mixture was concentrated under vacuum. The obtained solid was purified by flash chromatography using a mixture of AcOEt/petroleum ether.

When chloro compound is 4-chlorothieno[3,2-d]pyrimidine and acetylene compound is 4-methoxyphenylacetylene, then is obtained 4-((4-methoxyphenyl)ethynyl)thieno[3,2-d]pyrimidine(19a): white solid (59 mg, 75%), m.p. 144-146 °C.¹H NMR (400 MHz, CDCl₃) δ 3.84 (s, 3H), 6.92 (d, J = 8.8 Hz, 2H), 7.55 (d, J = 5.5 Hz, 1H), 7.62 (d, J = 8.8 Hz, 2H), 8.00 (d, J = 5.5 Hz, 1H),9.17 (s, 1H)ppm.¹³C NMR (101 MHz, CDCl₃) δ 55.4 (CH), 84.5 (C), 98.8 (C), 112.8 (C), 114.3 (2xCH), 124.9 (CH), 132.8 (C), 134.3 (CH), 136.3 (CH), 145.8 (C), 154.7 (CH), 160.5 (C), 161.3 (C) ppm. HRMS: calcd. for C₁₅H₁₁N₂OS [M+H]+ 267.0587, found 267.0584.

Similarly are obtained 3-(thieno[3,2-d]pyrimidin-4-ylethynyl)aniline(19b): yellow solid (60 mg, 81%), m.p. 149-151 °C, 4-((4-fluoro-3-methylphenyl)ethynyl)thieno[3,2-d]pyrimidine(19c): white solid (45 mg, 57%), m.p. 158-160 °C, 4-(pyridin-3-ylethynyl)thieno[3,2-d]pyrimidine(19e): white solid (52 mg, 75%), m.p. 136-138 °C, 7-((4-methoxyphenyl)ethynyl)-5-methyl-[1,2,4]triazolo[1,5-a]pyrimidine (20): white solid (21 mg, 27%), m.p. 182-184 °C, 4-((4-methoxyphenyl)ethynyl)-7H-pyrrolo[2,3-d]pyrimidine(22): yellow solid (7 mg, 9%), m.p. 185-187 °C, 4-((4-methoxyphenyl)ethynyl)furo[3,2-c]pyridine (24a): yellow solid (38 mg, 47%), m.p. 91-93 °C, 3-(furo[3,2-c]pyridin-4-ylethynyl)aniline (24b): white solid (39 mg, 51%), m.p. 119-121 °C, 4-(thiophen-3-ylethynyl)furo[3,2-c]pyridine (24d): yellow solid (39 mg, 53%), m.p. 97-99 °C, and 4-(pyridin-3-ylethynyl)furo[3,2-c]pyridine (24e): yellow solid (27 mg, 38%), m.p. 111-113 °C.

### Example 2: Use of eucalyptol for making or diluting a specialty chemical composition

### 2.1. Adhesive composition containing eucalyptol

### 2.1.1. Adhesive composition with added eucalyptol

20g of a commercial cyanoacrylate liquid adhesive composition of the brand name Loctite can be mixed with 1g of eucalyptol to afford a modified adhesive composition.

### 2.1.2 Adhesive composition wherein the original solvent is replaced with eucalyptol

50g of a commercial liquid adhesive composition of the brand name Scotch comprising polyvinyl acetate, methyl acetate, acetone, amorphous silica and methanol can be mixed with 30g of eucalyptol, then solvents (methyl acetate, acetone and methanol) are removed under reduced pressure until 30g of solvent have left from the adhesive composition. 30g of eucalyptol are added to the residue and the operation is repeated until there is less than 1wt% of a solvent chosen among methyl acetate, acetone and methanol. Solvent content is measured using conventional gas chromatography with added methyl acetate, acetone and/or methanol for quantitative measurement.

### 2.2. Paint composition containing eucalyptol

### 2.2.1. water-based paint

1g of eucalyptol can be mixed into 100mL of a commercial white paint comprising titanium dioxide and wherein the binder is a dispersion of copolymers in suspension in a water based phase is sold under the brand name Levis and the product name Planicryl satin.

### 2.2.2. oil-based paint

5g of eucalyptol can be mixed into 100mL of a commercial glycerophthalic anti-corrosion paint containing 10-20wt% C9-C11 hydrocarbon alkanes, less than 2wt% aromatic compounds, 1-5wt% zinc bis-(orthophosphonate),0.5-1.5wt% zirconium 2-ethylhexanoate, 0.1-0.25wt% of a mixture of C14-C18 fatty acids, optionally unsaturated with maleic acid phenoxy ester, less than 0.25wt% of cobalt bis(2-ethylhexanoate) and less than 0.15wt% of zinc bis(2-ethylhexanoate).

The same method can be used with 10g, 15g or 20g of eucalyptol.

### 2.3. Varnish composition with added eucalyptol or wherein the original solvent is replaced with eucalyptol

50g of a liquid commercial transparent varnish suitable for protection of ferrous metal can be mixed with 5mL of eucalyptol to obtain a diluted varnish.

Alternatively, 50g of the liquid commercial transparent varnish can be heated under vacuum to remove the solvent, then eucalyptol is added until the composition weight reaches 50g.

## Claims

1. Use of eucalyptol as substituent or in complement of a solvent or diluent which is not eucalyptol.

2. The use according to claim 1, wherein the solvent or diluent is partially substituted.

3. The use according to claim 1, for partial or complete substitution of a fossil-based solvent or diluent.

4. The use according to any one of claim 1 to 3, (i) for carrying out a chemical reaction, (ii) for making or diluting a specialty chemical composition, or (iii) for degreasing or lubricating a metal.

5. A process for carrying out a chemical reaction, comprising the use of eucalyptol according to any one of claims 1 to 4.

6. The process of claim 5, wherein eucalyptol is separated from the reaction mixture upon reaction completion and optionally recycled.

7. A process for making or diluting a specialty chemical composition chosen among a paint or a lacquer, comprising the use of eucalyptol according to any one of claims 1 to 4.

8. A process for making or diluting a specialty chemical composition which is a varnish, comprising the use of eucalyptol according to any one of claims 1 to 4.

9. A process for making or diluting a specialty chemical composition which is an adhesive, comprising the use of eucalyptol according to any one of claims 1 to 4.

10. A process for making or diluting a specialty chemical composition which is an optionally bio-sourced wax used for the protection or preservation of leather or wood, comprising the use of eucalyptol according to any one of claims 1 to 4.

11. A process for degreasing or lubricating a metal, comprising the use of eucalyptol according to any one of claims 1 to 4.

12. .Paint or lacquer composition containing eucalyptol, obtained according to the process of claim 7.

13. Varnish composition containing eucalyptol, obtained according to the process of claim 8.

14. Adhesive composition containing eucalyptol, obtained according to the process of claim 9.

15. Optionally bio-sourced wax composition containing eucalyptol, obtained according to the process of claim 10.
